# FASCICULE DE BREVET EUROPEEN

(11) **EP 0 822 364 B1**
(45) Date de publication et mention de la délivrance du brevet: **16.05.2001**
(21) Numéro de dépôt: 97420124.6
(22) Date de dépôt: 23.07.1997
(51) Int. Cl.: F16L 3/26, H02G 3/06

(54) **Eclisse d'assemblage pour tronçons de chemins de câbles et tronçons de chemins de câbles obtenus**
Anordnungsschiene für Kabelrinnenabschnitte und hergestellte Kabelrinnenabschnitte
Coupling for cableway sections and cableway sections obtained therefrom

(30) Priorité: 26.07.1996 FR 9609686
(43) Date de publication de la demande: 04.02.1998
(73) Titulaire: METAL DEPLOYE S.A., F-21500 Montbard (FR)
(72) Inventeur: Durin, Michel, 78210 Saint Cyr L'Ecole (FR); Badey, Claude, 91400 Saclay (FR); Deciry, James, 60200 Compiegne (FR)
(74) Mandataire: Desolneux, Jean-Paul Charles

(56) Documents cités:
- EP-A- 0 418 167
- EP-A- 0 556 137
- FR-A- 2 691 590
- FR-A- 2 711 208
- US-A- 5 384 937

## Description

La présente invention est relative aux chemins de câbles en fils et concerne une éclisse d'assemblage des tronçons de tels chemins de câbles et les tronçons de chemins de câbles prêts à assembler obtenus.

Comme on le sait les chemins de câbles en général et les chemins de câbles en fils en particulier sont destinés à supporter et conduire des câbles électriques de toutes sortes à haute ou basse énergie pour des usages très variés ainsi que de façon générale tous conducteurs ou canalisations souples allant d'un point à un autre, tel que par exemple des fibres optiques.

Ces chemins de câbles en fils sont formés par une structure de fils, généralement métalliques, disposés en treillis. Ils ont de façon générale mais non exclusive la forme d'une gouttière, le plus souvent en forme de U, mais pas exclusivement et comportent des fils transversaux, appelés aussi fils de trame, qui donnent la forme transversale de la gouttière et sont disposés régulièrement sur la longueur du chemin de câbles, fils transversaux qui sont assemblés par soudage ou analogue aux fils longitudinaux appelés aussi fils de chaîne répartis sur tout le pourtour de la gouttière. De la sorte on peut généralement distinguer sur ces chemins de câbles un fond et deux bords latéraux se terminant dans leur partie supérieure par un fil longitudinal de rive, bien que d'autres configurations soient possibles.

Ces chemins de câbles peuvent être installés dans toutes les positions possibles telles que à titre d'exemples non limitatifs en position avec fond horizontal, vertical ou incliné par rapport à l'horizontale.

La présente invention est relative à l'assemblage de tous types de chemins de câbles en fils quels que soient leur forme et la répartition, le nombre, la section, la forme, la nature des divers fils ou composants longitudinaux et transversaux dont est constitué le chemin de câbles, un exemple non limitatif étant donné par les chemins de câbles décrits dans le brevet EP 0298 825.

Ces chemins de câbles sont généralement réalisés par tronçons de longueur déterminée et doivent être assemblés sur leur lieu d'usage bout à bout sur la longueur voulue et dans la configuration voulue.

On utilise pour cela des pièces d'assemblage aptes à réunir mécaniquement deux tronçons successifs de chemins de câbles, pièces d'assemblage appelées généralement éclisses. C'est ce terme d'éclisse ou d'éclisse d'assemblage qui sera utilisé dans le présent document.

On connaît déjà de nombreuses éclisses pour chemins de câbles en fils.

Ces éclisses sont mises à disposition des utilisateurs comme des accessoires vendus séparément des chemins de câbles, ce qui oblige l'utilisateur à un travail de comptabilisation de ses besoins en éclisses d'autant plus que pour monter ces éclisses il est nécessaire le plus souvent de disposer d'outillages ou de pièces complémentaires de montage.

De plus ces éclisses ne peuvent être montées sur le chemin de câbles qu'une fois que les tronçons à assembler ont été disposés sur le chantier au lieu précis où le montage doit être réalisé.

Le montage se fait alors dans des conditions peu confortables voire d'accès difficile car généralement en hauteur.

Le brevet FR 2.691.590 décrit par ailleurs des tronçons de chemins de câbles auto-encastrables constitués par des modules asymétriques de chemins de câbles. Selon ce document, une éclisse est soudée par une de ses extrémités de façon permanente à une des extrémités du module, l'autre extrémité de l'éclisse comportant un ergot d'accouplement assurant la liaison à l'extrémité du module suivant à assembler.

L'utilisation d'éclisses montées à demeure et de façon inamovible sur les chemins de câbles permet de résoudre certaines des difficultés évoquées précédemment mais crée d'autres problèmes pour le producteur et l'utilisateur de tels chemins de câbles, tels que notamment : opérations supplémentaires de soudage, double stock de chemins de câbles avec éclisses soudées et sans éclisses soudées. De plus si, pour des raisons de longueur d'installation, on coupe un module, selon le FR 2.691.590, la partie ne comportant pas les éclisses soudées nécessite de faire appel à des éclisses séparées pour être réutilisée.

La présente invention a pour objet une éclisse d'assemblage avantageusement exempte des inconvénients exposés ci-dessus.

On a cherché dans la présente invention à réaliser une éclisse d'assemblage pour chemins de câbles en fils ayant un caractère universel, c'est-à-dire pouvant être soit vendue ou utilisée séparément, soit montée d'avance sur une extrémité de tronçon de chemin de câbles, le tronçon de chemin de câbles et l'éclisse étant vendus dans ce cas comme un tout prêt au montage avec un autre tronçon de chemin de câbles, mais l'éclisse restant toujours démontable facilement.

On a cherché encore à réaliser une éclisse d'assemblage apte à être montée et maintenue en position sur une seule extrémité d'un premier tronçon de chemin de câbles, l'assemblage d'un deuxième tronçon de chemin de câbles par la même éclisse ne nécessitant aucun démontage de ladite éclisse du premier tronçon et se faisant très facilement.

On a cherché également à réaliser une éclisse d'assemblage qui présente au montage les jeux d'assemblage les plus faibles possibles et donne une liaison entre tronçons de chemins de câbles la plus rigide possible tout en étant démontable, et qui accessoirement assure une bonne continuité électrique du chemin de câbles.

On a cherché à réaliser une éclisse d'assemblage qui permette d'assurer un montage et démontage facile des tronçons de chemins de câbles et qui ne nécessite pas pour ces opérations d'outils spécifiques ou pièces d'accessoires spécifiques.

On a cherché aussi à réaliser des éclisses d'assemblage qui quand elles sont disposées d'avance sur les tronçons de chemins de câbles permettent l'empilage des tronçons le plus compact possible notamment pour leur transport.

Selon l'invention, l'éclisse d'assemblage qui permet l'assemblage de deux tronçons de chemins de câbles en fils est divisée longitudinalement en deux branches, chaque branche étant munie de moyens de montage permettant son verrouillage en position de manière amovible respectivement sur la zone d'extrémité d'un premier tronçon et la zone d'extrémité d'un deuxième tronçon. Une telle éclisse est connue du FR-A-2 711 208.

Selon l'invention les moyens de montage de la première branche sont indépendants de ceux de la deuxième branche et permettent à eux seuls de rendre solidaire l'éclisse avec le premier tronçon, les moyens de montage de la deuxième branche sur le deuxième tronçon comportant au moins un moyen d'accrochage élastique apte à coopérer avec un fil transversal du deuxième tronçon, lors de l'assemblage des deux tronçons.

En général les fils des chemins de câbles seront des fils métalliques et l'éclisse d'assemblage sera également en métal ayant les caractéristiques de ténacité et l'élasticité voulues pour assurer l'assemblage dans de bonnes conditions.

Ainsi on comprend que les moyens de montage de la première branche permettent de façon autonome et indépendante d'assembler et de verrouiller l'éclisse sur l'extrémité d'un premier tronçon de chemin de câbles, un tel assemblage restant toujours démontable.

Pour assembler le deuxième tronçon sur le premier tronçon équipé d'éclisse selon l'invention l'extrémité du deuxième tronçon de chemin de câbles est déplacée d'un mouvement relatif éclisse-chemin de câbles et engagée sur la deuxième branche de l'éclisse, les moyens d'acccrochage élastique de cette deuxième branche permettant à eux seuls le verrouillage en position du deuxième tronçon à la suite du premier tronçon.

Pour réaliser cet assemblage, on laisse entièrement en position montée verrouillée la première branche de l'éclisse sur le premier tronçon, l'éclisse faisant en quelque sorte bloc avec le premier tronçon.

De façon avantageuse l'éclisse est constituée d'une pièce en forme générale de bande, profilée longitudinalement ou transversalement ou non profilée, dont les dimensions sont avantageusement telles qu'elle peut se loger entre deux fils longitudinaux de préférence successifs des tronçons de chemin de câbles à assembler.

L'éclisse sera avantageusement, mais non exclusivement, disposée dans la maille constituée en extrémité de chaque tronçon par deux fils longitudinaux successifs et deux fils transversaux successifs un de ces fils étant le fil transversal disposé à l'extrémité du tronçon à assembler.

Dans le cas où le chemin de câbles est muni de bord latéraux, on choisira avantageusement la maille comportant le fil longitudinal de rive.

Dans une solution préférentielle la bande constituant l'éclisse aura aux jeux près une largeur égale à la distance séparant deux fils longitudinaux successifs entre lesquels elle sera montée.

La bande constituant l'éclisse peut être profilée vers l'intérieur ou vers l'extérieur du chemin de câbles par pliage des bords de la bande de manière à donner à l'éclisse une plus grande rigidité aux endroits voulus.

Dans un premier exemple de mode de réalisation, les moyens de montage de la première branche, moyens qui sont destinés à assurer le positionnement, la fixation et le verrouillage de l'éclisse sur le premier tronçon, sont constitués, par d'une part une surface longitudinale d'appui sur au moins un fil longitudinal du tronçon et d'autre part, de chaque côté de cette surface longitudinale d'appui une surface transversale d'appui sur un fil transversal du tronçon, les deux surfaces transversales d'appui étant aptes à prendre appui sur deux fils transversaux différents successifs du tronçon. La surface longitudinale d'appui et les surfaces transversales d'appui sont telles qu'elles exercent des forces d'appui sur leurs fils respectifs, les forces exercées par la surface longitudinale d'appui étant en sens opposé aux forces exercées par les surfaces transversales d'appui et ces forces créent du fait des frottements et d'une légère déformation élastique un blocage de l'éclisse sur le tronçon de chemin de câbles.

De la sorte la surface longitudinale d'appui prendra appui sur l'intérieur d'un fil longitudinal alors que les surfaces transversales d'appui prendront appui sur l'extérieur des fils transversaux ou vice versa.

Avantageusement la surface longitudinale d'appui prendra appui sur les deux fils longitudinaux disposés lors du montage de part et d'autre de la première branche.

Un repère de position permettra de positionner de façon précise cette première branche sur le tronçon correspondant.

Les moyens de montage de la première branche comporteront également, avantageusement un moyen d'arrêt tel que par exemple un logement ou une encoche permettant éventuellement par déformation élastique de loger au moins partiellement un fil transversal.

Ce moyen d'arrêt permet d'assurer le verrouillage de l'éclisse sur son tronçon, ce moyen de verrouillage servant aussi de moyen de positionnement.

De façon à assurer une mise en position précise sur le tronçon, la première branche peut comporter une butée qui peut par exemple être conçue comme une patte pour assurer le logement d'un des fils transversaux. Le moyen d'arrêt peut être disposé vers cette butée ou du côté opposé.

Les surfaces transversales d'appui peuvent être constituées par la bande elle-même ou par ses bords.

La surface longitudinale d'appui peut être constituée par un prolongement transversal de la bande formant éclisse, prolongement ayant une forme apte à épouser la forme du ou des fils longitudinaux sur lesquels cette surface viendra s'appuyer. La surface longitudinale d'appui peut être constituée de plusieurs surfaces partielles ayant toutes la même fonction.

Dans un autre exemple de mode de réalisation, les moyens de montage et de positionnement de la première branche sont constitués par au moins une patte apte à recevoir un premier fil transversal et par une boucle apte à recevoir un deuxième fil transversal, l'ensemble patte/boucle assurant le verrouillage sur le premier tronçon de chemin de câbles.

On dimensionnera avantageusement la première branche de l'éclisse, sa patte et sa boucle de façon que la patte et la boucle s'appuient sur leur fil respectif, l'engagement du fil transversal dans le logement de la boucle se faisant avantageusement par déformation élastique de la boucle.

Dans le cas de cet autre mode de réalisation et dans le cas où la boucle est disposée au voisinage de l'extrémité libre de la première branche, on peut avantageusement disposer au voisinage de ladite boucle, une deuxième boucle constituant charnière et permettant de rabattre l'éclisse le long du chemin de câbles, en arrière, en position opposée à sa position vérrouillée un cliquet ou moyen équivalent permettant de maintenir l'éclisse dans cette position rabattue.

La deuxième branche de l'éclisse comporte au moins un moyen d'accrochage élastique apte à coopérer avec un fil transversal du deuxième tronçon de chemin de câbles.

Ce moyen d'accrochage élastique peut être disposé de façon à coopérer avec soit le fil transversal disposé en extrémité du deuxième tronçon soit avec le fil transversal suivant.

Par moyen d'accrochage élastique on entend tout moyen disposé sur la deuxième branche de l'éclisse qui exige pour monter le deuxième tronçon de chemin de câbles une déformation élastique soit de l'éclisse, soit du chemin de câbles soit des deux à la fois, l'éclisse et le chemin de câbles reprenant leur forme initiale après verrouillage.

Ce moyen élastique peut être disposé au voisinage du milieu de l'éclisse ou vers l'extrémité libre de la deuxième branche, suivant qu'il coopère respectivement avec le fil transversal d'extrémité du deuxième tronçon ou avec le fil transversal suivant.

Ce moyen élastique peut consister, par exemple et de façon non limitative, en une languette élastique de guidage inclinée par rapport à l'orientation générale de l'éclisse, disposée au voisinage de l'extrémité de la branche et munie d'un logement formé par exemple par un pli. Il peut comme autre exemple consister en un ergot constituant une rampe nécessitant déformation élastique, ergot à la suite duquel est ou non ménagé un logement spécifique pour le fil transversal.

Cet ergot peut être obtenu et réalisé par tout moyen tel que par exemple formage à dimension, emboutissage, coupe, pièce rapportée.

Avantageusement aussi les dimensions de la deuxième branche sont telles qu'elle pourra être logée entre deux fils longitudinaux successifs, ceci comme pour la première branche, la deuxième et la première branche étant réalisées dans une seule et même bande.

Les moyens de montage de la deuxième branche peuvent comporter plusieurs moyens d'accrochage élastique, chaque moyen coopérant avec un fil transversal différent.

Avantageusement les moyens de montage de la deuxième branche peuvent comporter également un moyen de guidage tel que au moins une languette disposée au voisinage de l'extrémité libre de la branche, le moyen d'accrochage élastique étant ou non situé à proximité du moyen de guidage.

L'éclisse peut comporter au voisinage de son milieu un plot formant butée sur lequel viennent s'appuyer au montage les fils transversaux d'extrémité des deux tronçons assemblés. Ce plot peut être constitué par une patte de la première branche de l'éclisse, dans le cas où cette première branche comporte une patte disposée au voisinage de la surface transversale d'appui située vers le milieu de l'éclisse.

De préférence on disposera les moyens de montage de la deuxième branche et les moyens de montage de la première branche de façon à réduire les jeux du montage au minimum, la deuxième branche et la première branche étant en position assemblée sur leur tronçon respectif légèrement en traction.

L'invention est également relative à l'utilisation des éclisses décrites pour réaliser un tronçon de chemin de câbles en fils dont une extrémité comporte deux éclisses telles que précédemment décrites, montées et verrouillées sur ledit tronçon par leurs premières branches, l'autre extrémité de ce tronçon étant libre pour accueillir les deuxièmes branches de deux autres éclisses montées et verrouillées sur un autre tronçon pour assembler entre eux ces tronçons.

Un tel tronçon de chemin de câbles en fils comportant d'un côté des éclisses également selon l'invention déjà montées par les premières branches sera désigné par la suite comme un tronçon prémonté.

Ainsi l'invention est aussi relative à ce tronçon prémonté.

Un tel tronçon prémonté est très facile à assembler à l'extrémité libre d'un autre tronçon prémonté ou non prémonté.

Il suffit d'amener les deux tronçons en position alignée légèrement en biais et d'engager les deuxièmes branches des deux éclisses dans les logements du deuxième tronçon destiné à les accueillir, logement avantageusement situé entre deux fils longitudinaux successifs.

Après avoir rapproché les deux tronçons on engage, par poussée axiale des deux tronçons l'un sur l'autre, le ou les moyens d'accrochage élastiques prévus sur chaque deuxième branche sur le fil transversal avec lequel ils doivent coopérer.

Lorsque le tronçon a une forme de U, les deux éclisses du tronçon prémonté seront disposées sur les bords latéraux du tronçon et de façon symétrique. Ces éclisses peuvent être avantageusement logées entre le fil longitudinal de rive et le fil longitudinal suivant.

On voit ainsi les avantages considérables que présente l'invention, les tronçons de chemin de câbles pouvant être livrés soit prémontés soit non prémontés.

Aucun changement de la gamme de fabrication du chemin de câbles n'est nécessaire. Il suffit de monter les éclisses de l'invention sur les tronçons pour obtenir les tronçons prémontés, ceci suivant les besoins, par exemple juste avant mise en expédition des tronçons. On évite de la sorte toute opération lourde du type soudage avec l'avantage de pouvoir toujours en cas de besoin récupérer les tronçons nus sans éclisses.

La conception des éclisses selon l'invention permet par ailleurs très facilement de transporter empilés les uns sur les autres les tronçons prémontés.

Le démontage des éclisses selon l'invention, pas plus que le montage n'exigent d'outil spécifique ou de pièces accessoires. Toutefois si nécessaire on pourra utiliser un outil tel qu'un tournevis pour faire levier et faciliter le montage ou démontage des éclisses.

L'éclisse peut être constituée d'une bande unique monobloc à laquelle on a donné de par sa forme toutes les fonctions voulues aux emplacements voulus. Il est aussi possible de la réaliser de façon composite en réunissant les différents composants assurant les différentes fonctions par exemple par soudage ou autre moyen sur un support commun par exemple en forme de bande.

L'invention sera maintenant décrite, à titre d'illustration et sans aucun caractère limitatif, à l'aide des quelques exemples qui suivent illustrés par les figures dans lesquelles :
- la figure 1 est une vue en perspective représentant un tronçon de chemin de câbles en fils,
- la figure 2 est une vue en perspective d'un premier exemple d'un jeu de deux éclisses identiques selon l'invention,
- la figure 3 est une vue de dessus de l'éclisse de la figure 2 selon la flèche F₁,
- la figure 4 est une vue en élévation de l'éclisse de la figure 2 selon la flèche F₂,
- la figure 5 est une vue en perspective du tronçon de la figure 1 sur lequel ont été montées les éclisses de la figure 2,
- la figure 6 est une vue en perspective de deux tronçons de chemin de câbles identiques à celui de la figure 1 assemblés par deux éclisses de la figure 2.
- la figure 7 est une variante du détail A de la figure 3
- la figure 8 est une variante du détail B de la figure 3
- les figures 9a et 9b sont deux vues d'une variante du détail A de la figure 3,
- la figure 10 est une représentation selon la coupe C-C de la figure 4
- la figure 11 est une vue de dessus d'un autre exemple de réalisation d'une éclisse selon l'invention en position montée sur deux tronçons de chemin de câbles assemblés.
- la figure 12 représente en vue de dessus l'éclisse de la figure 11 en position rabattue en arrière sur un premier tronçon de chemin de câbles.

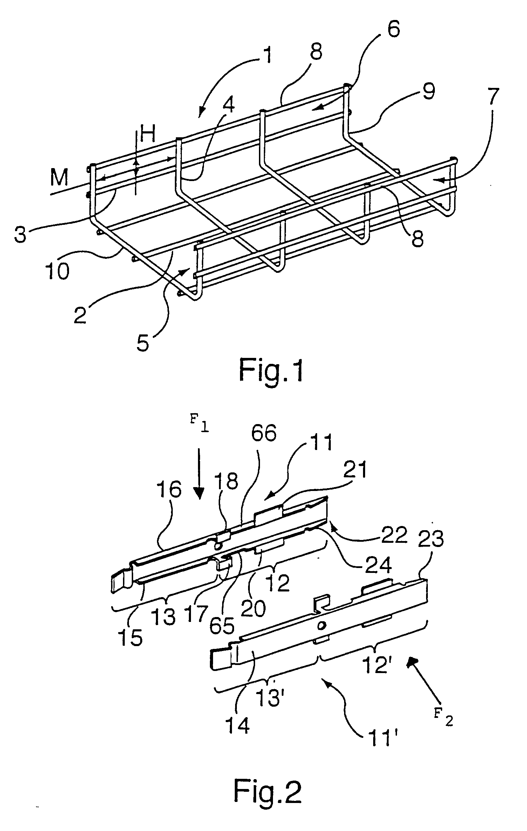

La figure 1 représente en perspective un tronçon 1 de chemin de câbles en fils, constitué de fils longitudinaux tels que 2, 3 assemblés par soudage en treillis sur des fils transversaux tels que 4 en forme générale de U, disposés à distance régulière le long du chemin de câbles. Ainsi ce chemin de câbles présente un fond plat 5 et des bords latéraux tels que 6, 7 chacun de ces bords se terminant par un fils longitudinal de rive 8.

On a pour simplifier la figure limité la représentation du tronçon 1 à quatre fils transversaux 4 dont deux fils 9 et 10 représentent les fils d'extrémité du tronçon. En pratique un tel tronçon peut avoir une longueur quelconque pouvant atteindre plusieurs mètres, les tronçons étant en général vendus en longueurs standardisées de quelques mètres.

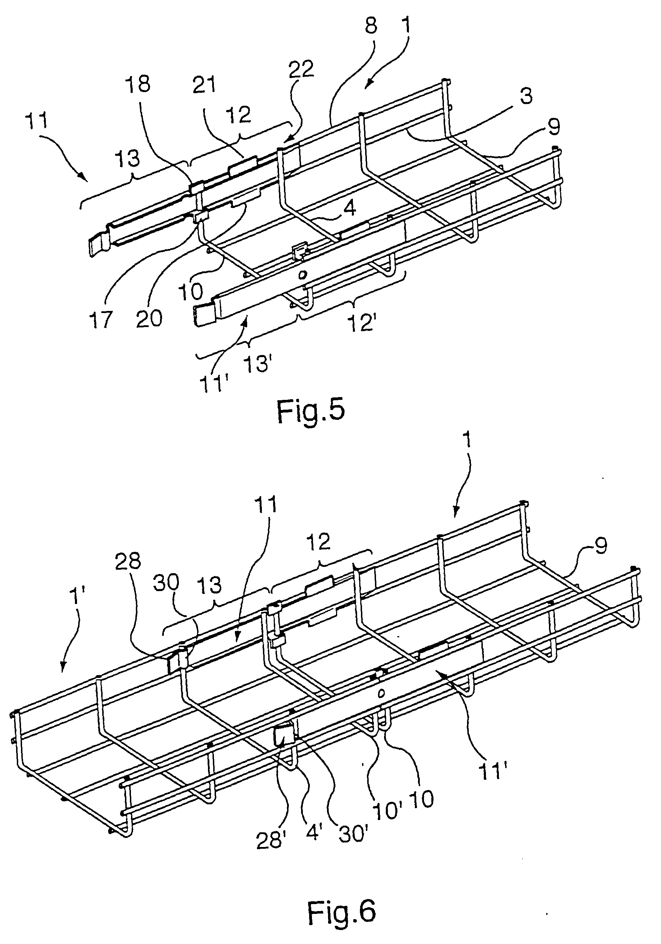

La figure 2 représente comme premier exemple en perspective un jeu de deux éclisses 11, 11' selon l'invention, éclisses destinées à l'assemblage de deux tronçons de chemin de câbles 1, 1', tel que représenté figure 6.

Les deux éclisses 11 et 11' sont identiques, seul le côté sous lequel elles sont vues diffère et elles sont divisées longitudinalement en deux branches : la première branche 12, 12' destinée à être montée sur un premier tronçon, le tronçon 1 de chemin de câbles et la deuxième branche 13, 13' destinée à être montée sur un deuxième tronçon, le tronçon 1' de chemin de câbles.

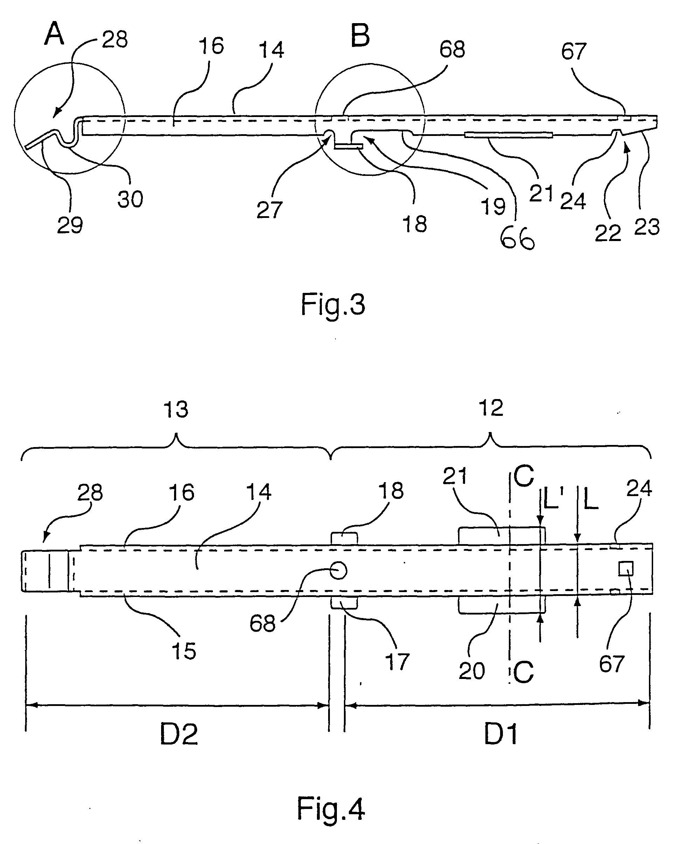

La même éclisse 11, 11' est représentée sous d'autres angles aux figures 3 et 4. Figure 5 elle est représentée montée et verrouillée et positionnée sur un premier tronçon 1 de chemin de câbles. Figure 6, les deux tronçons 1, 1' sont assemblés juxtaposés et en ligne, réunis par les éclisses 11, 11'.

Dans l'exemple de réalisation présenté ici, l'éclisse se présente en forme générale de bande 14 monobloc à laquelle on a donné la forme voulue aux emplacements voulus pour assurer toutes les fonctions nécessaires et, notamment assurer par des moyens de montage, le montage respectivement sur le premier tronçon 1 et sur le deuxième tronçon 1'.

Selon l'invention les moyens de montage de la branche 12, moyens que l'on décrira ci-après permettent de façon autonome et indépendante de monter, verrouiller et positionner l'éclisse 11, 11' telle que représentée figure 5, sur un premier tronçon 1.

Ainsi, il n'y a pas équivalence ou symétrie de fonctions entre les deux branches 12 et 13 de l'éclisse 11, les moyens de montage de la deuxième branche 13 ne permettant pas de monter, de façon indépendante, l'éclisse 11 sur un tronçon de chemin de câbles isolé, contrairement aux moyens de montage de la première branche 12.

La bande 14 comporte sur la majeure partie de sa longueur sur chacune de ses deux rives un bord replié 15, 16 qui permet de donner à l'éclisse les caractéristiques de rigidité, de moment et d'élasticité voulus.

La section transversale de la bande 14 est ici en forme de U à fond plat dont l'ouverture est orientée vers l'intérieur du chemin de câbles, l'éclisse étant positionnée à l'extérieur du chemin de câbles.

La largeur L de la bande 14 est avantageusement choisie égale aux jeux près à la hauteur H séparant deux fils longitudinaux successifs tel que 3 et 8, ce dernier fil constituant le fil de rive.

De la sorte, on peut avantageusement loger l'éclisse 11 entre deux fils longitudinaux successifs, la longueur D1, D2 de chacune des branches respectivement 12, 13 étant un peu supérieure à la longueur M séparant deux fils transversaux 10, 4 successifs pour que les moyens de montage de chacune des branches puissent coopérer avec deux fils transversaux tels que 10, 4.

Les moyens de montage de la première branche 12 comportent en premier lieu une surface longitudinale d'appui sur les fils longitudinaux 3, 8 qui longent l'éclisse 11 lorsque celle-ci est montée, surface longitudinale d'appui constituée ici de deux oreilles 20, 21 disposées de part et d'autre de la bande 14 et dont la largeur hors tout L' est supérieure à la hauteur H séparant deux fils longitudinaux successifs tels que 3, 8.

De la sorte les oreilles 20, 21 peuvent prendre appui sur le côté intérieur des deux fils longitudinaux ici 3, 8 situés de part et d'autre de l'éclisse 11 lors du montage.

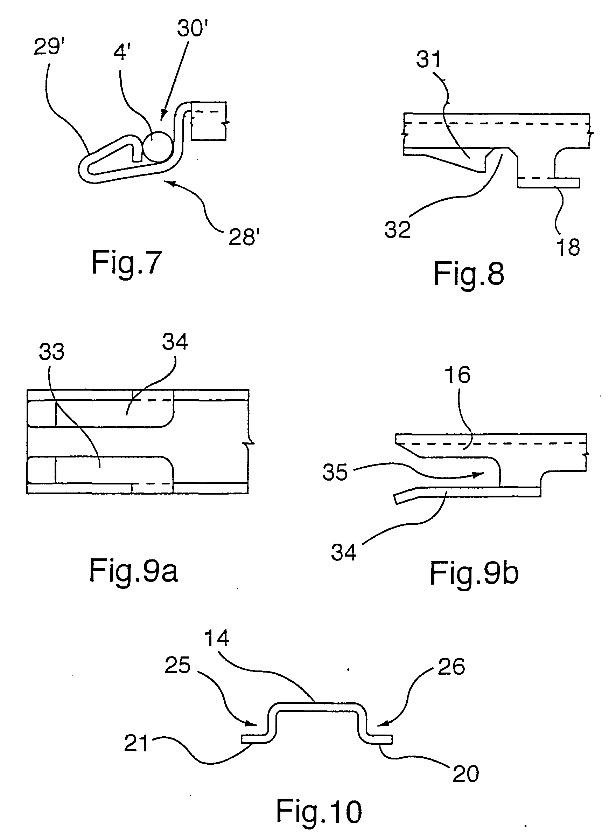

La figure 10 représente la coupe par le plan C-C de la figure 4 au niveau des oreilles 20, 21. On voit ici que les oreilles sont solidaires sur toute leur longueur mesurée parallèlement à la bande 14 avec le bord replié 15, 16 de la bande 14.

On peut en variante réaliser des oreilles 20, 21 dont seule une partie de la longueur est solidaire avec le bord replié de la bande 14.

De la sorte dans cette variante la surface d'appui constituée par de telles oreilles 20, 21 présente en appui sur l'intérieur des fils longitudinaux une élasticité à ce niveau qui permet avantageusement de rattraper les jeux pouvant exister dans la disposition des fils longitudinaux et transversaux.

C'est dans les logements 25, 26 que viennent se positionner en appui les fils longitudinaux 3 et 8 comme on le voit figure 5.

Les moyens de montage de la première branche comportent, en deuxième lieu, de chaque côté de la surface longitudinale d'appui constituée par les oreilles 20, 21, une surface transversale d'appui sur un fil transversal.

La première surface transversale d'appui située au voisinage du milieu de l'éclisse 11 c'est-à-dire à l'extrémité interne du tronçon 12 est constituée par la tranche 65, 66 du bord replié 15, 16 de chaque côté de la bande 14 complété par une patte 17, 18 apte à recevoir et loger dans le logement 19 un fil transversal du premier tronçon 1, ici le fil transversal d'extrémité 10 comme on peut le voir sur la figure 5.

La deuxième surface transversale d'appui située de l'autre côté des oreilles 20, 21 se trouve ici au voisinage de l'extrémité libre de la branche 12.

Cette deuxième surface d'appui 22, est formée ici par une rampe 23 taillée sur les bords 15, 16 à l'extrémité de la branche 12 et qui comporte un moyen d'arrêt, ici un logement d'arrêt 24 et permet à l'éclisse de prendre appui sur l'extérieur du fil transversal ici 4 correspondant à l'extrémité libre de cette branche 12 de l'éclisse 11, avec blocage dudit fil dans le logement d'arrêt 24.

Les dimensions, forme et position des oreilles 20, 21 de la première surface transversale d'appui 65, 66 et de la patte 17, 18 et de la deuxième surface transversale d'appui 22 sont telles que la branche 12 de l'éclisse prend simultanément appui et dans le sens opposé sur l'intérieur des fils longitudinaux 3, 8, et sur l'extérieur des fils transversaux 10, 4 provoquant ainsi du fait d'une légère déformation élastique un coincement et un blocage en position de la branche 12 qui est très efficace et coordonné avec le logement du fil transversal 10 dans le logement 19 des pattes 17, 18, le fil transversal 4 se positionnant dans le logement d'arrêt 24.

La surface d'appui 22 apparaît dans son fonctionnement à la figure 5.

En variante non représentée le logement 19, qui sert aussi de surface d'appui au lieu d'être constitué par une patte 17, peut être simplement constitué par une encoche d'arrêt du même type que le logement d'arrêt 24, le fil transversal 10 prenant appui du côté extérieur sur un tel logement d'arrêt.

Dans une autre variante non représentée au lieu de deux logements d'arrêt tels que 24, un pour recevoir le fil transversal 10, un pour recevoir le fil transversal 4 comme décrit au paragraphe précédant, la première branche peut comporter seulement un seul logement à une de ses extrémités.

L'avantage de la patte 17, 18 est de constituer tant pour le premier tronçon 1 que pour le deuxième tronçon 1' un talon de butée ou plot de butée des fils d'extrémité respectifs de ces tronçons soit 10, 10', le fil 10' venant se positionner dans l'encoche 27 située contre la patte 17, 18, du côté de la deuxième branche 13 de l'éclisse 11.

Ce talon de butée permet d'éviter que les fils transversaux d'extrémités 10, 10' des tronçons 1, 1' soient accolés l'un contre l'autre ce qui permet de s'affranchir des problèmes d'aboutage des extrémités de fils longitudinaux.

De plus on peut utiliser la zone de la bande 14 au droit de la patte 17, 18 pour disposer un trou tel que 68.

Ce trou permet la fixation d'autres accessoires tels que par exemple une pièce pour mise à la terre des tronçons 1, 1' ou une pièce de serrage permettant d'assurer la continuité électrique entre les tronçons 1, 1' lors de l'assemblage.

Les moyens de montage de la deuxième branche 13 sur le deuxième tronçon 1' comportent quant à eux au moins un moyen d'accrochage élastique.

Sur les figures 3 et 4, ce moyen d'accrochage est constitué, en extrémité libre de l'éclisse, par une languette élastique 28 dont l'extrémité 29 forme guidage incliné, languette qui comporte un pli 30 formant logement d'accrochage pour le fil transversal 4' avec lequel cette languette est destinée à coopérer. L'engagement de ce fil 4' dans le logement 30 est facilité par l'extrémité 29 inclinée.

Une variante de l'extrémité libre de la deuxième branche 13 représentée en A est représentée à la figure 7, la languette élastique 28' fournissant dans ce cas par sa forme à la fois un guidage 29' et un logement 30' dans lequel s'accroche le fil 4'.

En variante la deuxième branche 13 de l'éclisse 11 peut comporter au lieu du système élastique représenté en A sur la figure 3 un système représenté figure 8 et qui vient se substituer au détail représenté dans la partie centrale de l'éclisse en B sur la figure 3. Dans ce cas on peut avantageusement remplacer l'extrémité représentée en A sur la figure 3 par l'extrémité représentée figures 9 a et 9 b.

Le moyen d'accrochage élastique de la figure 8 comporte un ergot ou rampe 31 suivi d'une encoche 32 formant logement d'accrochage pour le fil transversal 10' d'extrémité du deuxième tronçon 1'.

L'extrémité libre de ce tronçon 13 comporte avantageusement un moyen de guidage du deuxième fil transversal 4', tel que celui représenté aux figures 9 a et 9 b, constitué par une fourchette, le fil transversal 4' venant se loger entre les bandes 33, 34 et les bords 15, 16 de l'éclisse à son extrémité, l'extrémité libre de la fourchette étant évasée pour faciliter le guidage du fil transversal 4' et le fond 35 de la fourchette formant logement pour ce fil 4'.

On voit dans ce cas que tant les moyens élastiques représentés en A figure 3 que ceux représentés figure 8 nécessitent une déformation élastique soit du chemin de câbles et en particulier du fil transversal du tronçon 1' avec lequel coopèrent ces moyens soit de l'éclisse, soit des deux à la fois pour provoquer l'accrochage et l'assemblage du deuxième tronçon 1' sur les éclisses déjà montées sur le premier tronçon 1.

La figure 5 représente un tronçon 1 prémonté selon l'invention, deux éclisses 11, 11' étant montées de façon symétrique par leur première branche 12, 12' sur les bords latéraux 6, 7 du tronçon 1, entre le fil de rive 8 et le fil longitudinal suivant 3, l'autre extrémité 9 du tronçon 1 étant prête à accueillir un autre tronçon prémonté. Le tronçon 1 prémonté est prêt à accueillir sur les deuxièmes branches 13, 13' des deux éclisses 11, 11' un nouveau tronçon ici l'identique au tronçon 1.

Le montage se réalise en amenant en position alignée légèrement en biais les deux tronçons 1, 1' puis en utilisant les moyens de guidage précédemment décrits et disposés en extrémité libre des branches 13, 13' des éclisses en engageant le fil transversal 4' dans ses logements d'accrochage 30, 30', par poussée mutuelle axiale des deux tronçons 1, 1' l'un vers l'autre.

De même l'autre extrémité libre du tronçon 1 est prête à accueillir un nouveau tronçon prémonté, de sorte que l'on pourra très facilement assembler une ligne de chemin de câbles en fils.

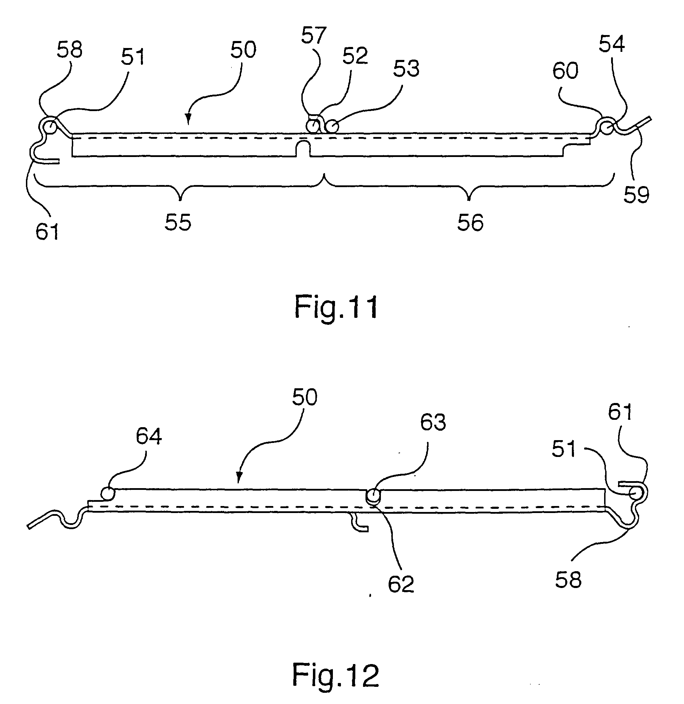

Sur les figures 11 et 12 est représenté un autre exemple de réalisation de l'éclisse selon l'invention.

Sur la figure 11, l'éclisse 50 est représentée montée sur deux tronçons de chemins de câbles, en position assemblée, le premier tronçon étant figuré par deux fils transversaux 51, 52 , le fil 52 étant le fil d'extrémité, le second tronçon étant figuré également par deux fils transversaux 53, 54, le fils 53 étant le fil d'extrémité. La référence 55 désigne la première branche et la référence 56 la deuxième branche de l'éclisse 50 également en forme générale de bande avec bords repliés.

Les moyens de montage de la première branche comprennent en premier lieu une patte 57 permettant de loger le fil 52 et, disposée à l'extrémité libre de cette branche 55 une boucle 58 permettant de loger et verrouiller l'éclisse sur le fil 51.

Dans ce cas de la figure 11, l'éclisse ne comporte pas de surface d'appui sur les fils longitudinaux, le montage se faisant uniquement à l'aide de deux fils transversaux successifs ici 52, 51.

La deuxième branche 56 comporte un moyen élastique du type languette 59 avec guidage incliné et pli 60 formant logement d'accrochage pour le fil 54, moyen semblable à celui figurant au détail A figure 3.

Le fil d'extrémité 53 du deuxième tronçon vient se positionner au montage à proximité de la patte 57, sur l'extérieur de cette patte.

L'éclisse selon la figure 11 comporte à l'extrémité de la première branche 55, à la suite de la boucle 58, une deuxième boucle 61.

Cette deuxième boucle 61 permet d'accrocher à l'envers l'éclisse sur un tronçon de chemin de câbles en la maintenant entre un fil transversal se logeant dans cette deuxième boucle 61 et une encoche de logement 62 recevant le fil transversal suivant. De la sorte l'éclisse est maintenue à l'extérieur du tronçon de câbles sur lequel on a prévu de la monter.

La boucle 61 fait en quelque sorte charnière.

Avantageusement on maintiendra cette éclisse en utilisant comme fil transversal se logeant dans la deuxième boucle 61 le même fil que celui qui servira au montage sur le premier tronçon ici le fil 51, les autres fils 63, 64 se positionnant naturellement dans leur logement.

De la sorte, il suffira de faire pivoter l'éclisse de 180° autour du fil 51 pour l'amener en position montée et obtenir un tronçon prémonté.

On voit que dans tous les cas de figure décrits, le montage de la première branche sur le premier tronçon de chemin de câbles se fera très facilement. Dans le cas du premier exemple de réalisation décrit aux figures 2 à 10 le montage se fera en faisant glisser l'éclisse 11, 11' sur ses surfaces longitudinales et transversales d'appui jusqu'à son blocage en position, blocage favorisé par la présence des pattes 17, 18 et du logement d'arrêt 24. Le démontage se fera par poussée de glissement en sens contraire.

Si nécessaire on peut utiliser un outil du type tournevis pour faciliter cette mise en place de l'éclisse et/ou son démontage. On peut à cet effet disposer sur la bande 14 de la branche 12 et vers l'extérieur par rapport au logement d'arrêt 24 un trou par exemple carré 67, un tournevis s'appuyant sur les bords de ce trou 67 et faisant levier sur le fil transversal 4 soit dans un sens soit dans l'autre pour engager ou dégager le fil transversal 4 du logement d'arrêt 24.

Dans le cas du deuxième exemple de réalisation décrit aux figures 11 et 12, il suffit pour monter la première branche sur le premier tronçon d'engager le fil transversal d'extrémité 52 et le fil 51 dans leurs logements respectifs en commençant par placer le fil 52 dans la patte 57, le fil 51 s'engageant alors élastiquement dans la boucle 58, le démontage se faisant par opération inverse.

De plus, de façon avantageuse les moyens de montage de chaque branche 12, 13, 55, 56 seront positionnés et dimensionnés de façon telle que chaque branche d'éclisse assemblée et verrouillée sur son tronçon correspondant présente un jeu minimal, voire nul par rapport au tronçon sur lequel elle est verrouillée.

Pour arriver à ce résultat on disposera les divers moyens de montage de chaque branche de façon à créer une légère contrainte de traction sur la branche correspondante.

Ainsi on évitera toute vibration ou battement de l'éclisse en service tant sur les tronçons prémontés que sur les tronçons assemblés deux à deux.

Le montage et démontage des éclisses selon l'invention ne nécessitent comme on l'a expliqué ci-dessus aucune pièce accessoire.

On voit donc que l'éclisse selon l'invention présente bien le caractère universel et la polyvalence d'emploi soit en tant qu'éclisse séparée des tronçons de chemin de câbles soit en tant que tronçons prémontés.

## Revendications

1. Eclisse d'assemblage de tronçons de chemin de câbles constitués d'un treillis de fils longitudinaux et de fils transversaux, divisée longitudinalement en deux branches, chaque branche étant munie de moyens de montage permettant son verrouillage en position de manière amovible respectivement sur la zone d'extrémité d'un premier tronçon et la zone d'extrémité d'un deuxième tronçon, caractérisée en ce que les moyens de montage de la première branche permettent à eux seuls de rendre solidaire l'éclisse avec le premier tronçon, les moyens de montage de la deuxième branche sur le deuxième tronçon comportant au moins un moyen d'accrochage élastique apte à coopérer avec un fil transversal du deuxième tronçon, lors de l'assemblage des deux tronçons.

2. Eclisse selon la revendication 1 caractérisée en ce qu'elle a la forme générale d'une bande profilée ou non, les moyens de montage de la première et de la deuxième branche étant disposés sur la bande aux emplacements voulus.

3. Eclisse selon la revendication 2 caractérisée en ce que les moyens de montage de la première et deuxième branches font partie intégrante de la bande qui est monobloc.

4. Eclisse selon la revendication 2 ou 3 caractérisée en ce que la bande est munie de bords pliés vers l'intérieur ou l'extérieur du tronçon de chemin de câbles sur lequel elle doit être montée.

5. Eclisse selon l'une des revendications 2 à 4 caractérisée en ce que la bande a une largeur qui aux jeux près est égale à la distance séparant deux fils longitudinaux successifs des tronçons entre lesquels elle est montée.

6. Eclisse selon la revendication 5 caractérisée en ce que les deux fils longitudinaux sont des fils disposés sur le bord latéral des tronçons, un des fils longitudinaux étant un fil de rive.

7. Eclisse selon l'une des revendications 1 à 6 caractérisée en ce que les moyens de montage de la première branche sont constitués par au moins une patte apte à recevoir un premier fil transversal et une boucle apte à recevoir un deuxième fil transversal, l'ensemble patte-boucle assurant le verrouillage sur le premier tronçon de chemin de câbles.

8. Eclisse selon la revendication 7 caractérisée en ce que la boucle est disposée au voisinage de l'extrémité libre de la première branche.

9. Eclisse selon la revendication 8 caractérisée en ce qu'elle comporte au voisinage de la boucle une deuxième boucle constituant charnière et permettant de rabattre l'éclisse le long du tronçon en position arrière opposée à sa position montée, un cliquet ou un moyen équivalent permettant de la maintenir dans cette position rabattue.

10. Eclisse selon l'une des revendications 1 à 6 caractérisée en ce que les moyens de montage de la première branche sont constitués par une surface longitudinale d'appui sur au moins un fil longitudinal du tronçon et de chaque côté de cette surface longitudinale d'appui une surface transversale d'appui sur un fil transversal les deux surfaces transversales d'appui étant aptes à prendre appui sur deux fils transversaux différents, les forces s'exerçant sur la surface longitudinale d'appui étant de direction opposée aux forces s'exerçant sur les deux surfaces transversales d'appui, au moins un repère permettant de positionner l'éclisse dans une position déterminée.

11. Eclisse selon la revendication 10 caractérisée en ce qu'elle comporte un moyen d'arrêt permettant de verrouiller l'éclisse dans une position déterminée.

12. Eclisse selon la revendication 10 ou 11 caractérisée en ce que les deux surfaces transversales d'appui sont aptes à prendre appui sur deux fils transversaux successifs.

13. Eclisse selon l'une des revendications 10 à 12 caractérisée en ce que la surface longitudinale d'appui est constituée par des oreilles disposées latéralement sur les bords de la bande, oreilles qui sont de forme apte à prendre appui sur deux fils longitudinaux, ces oreilles étant solidaires avec les bords de la bande sur tout ou partie de leur longueur.

14. Eclisse selon l'une des revendications 10 à 13 caractérisée en ce que les surfaces transversales d'appui sont constituées par la tranche des bords pliés de la bande.

15. Eclisse selon l'une des revendications 11 à 14 caractérisée en ce que le moyen d'arrêt est constitué par au moins une patte ou une encoche dans laquelle peut se loger au moins partiellement un fil transversal coopérant avec une des surfaces d'appui transversale.

16. Eclisse selon la revendication 15 caractérisée en ce qu'elle comprend un deuxième moyen d'arrêt, chaque moyen d'arrêt coopérant avec un fil transversal différent.

17. Eclisse selon l'une des revendications 10 à 16 caractérisée en ce qu'au moins une des surfaces transversales d'appui comporte une rampe d'accès.

18. Eclisse selon l'une des revendications 1 à 17 caractérisée en ce que le moyen d'accrochage élastique de la deuxième branche est disposé au voisinage de l'extrémité libre de cette branche et est constitué d'une languette munie d'un pli formant logement pour un fil transversal.

19. Eclisse selon la revendication 18 caractérisée en ce que la languette est inclinée par rapport à la direction générale de la bande.

20. Eclisse selon l'une des revendications 1 à 17 caractérisée en ce que le moyen d'accrochage élastique de la deuxième branche est constitué par un ergot disposé soit au voisinage de l'extrémité libre de la branche, soit au voisinage du milieu de l'éclisse, ergot apte à coopérer élastiquement avec un fil transversal et à le loger.

21. Eclisse selon l'une des revendications 18 à 20 caractérisée en ce qu'elle comporte en plus un moyen de guidage disposé à l'extrémité libre de la deuxième branche.

22. Tronçon de chemin de câbles en fils caractérisé en ce qu'une extrémité est munie de deux éclisses selon l'une des revendications 1 à 21 montées par leurs premières branches sur ledit tronçon, l'autre extrémité du tronçon étant dépourvue d'éclisses, mais apte à recevoir le moyen d'accrochage élastique des deuxièmes branches de deux autres éclisses selon l'une des revendications 1 à 21 montées sur un autre tronçon.

23. Tronçon selon la revendication 22 caractérisé en ce que les deux éclisses sont montées de façon symétrique sur les bords latéraux du tronçon.

24. Tronçon selon la revendication 23 caractérisé en ce que les deux éclisses sont montées entre le fil de rive et le fil longitudinal qui précède le fil de rive.

## Claims

1. A coupling for assembling cable tray unit sections constituted by a mesh of longitudinal and transverse wires, the coupling being longitudinally divided into two arms, each arm being provided with mounting means for latching it removably in position on the end zone of a first unit section and on the end zone of a second unit section respectively, characterized in that the means for mounting the first arm can alone render the coupling solid with the first unit section, the means for mounting the second arm on the second unit section comprising at least one resilient catch means which can co-operate with a transverse wire of the second unit section during assembly of the two unit sections.

2. A coupling according to claim 1, characterized in that it has the general form of a strip which may or may not be profiled, the mounting means of the first and second arm being located on the strip in the desired positions.

3. A coupling according to claim 2, characterized in that the mounting means for the first and second arms are integral with the strip which is in one piece.

4. A coupling according to claim 2 or claim 3, characterized in that the strip is provided with edges which are lapped to the inside or to the outside of the cable tray unit section on which it is to be mounted.

5. A coupling according to any one of claims 2 to 4, characterized in that the strip has a width which, apart from clearances, equals the distance separating two successive longitudinal wires of the unit section between which it is mounted.

6. A coupling according to claim 5, characterized in that the two longitudinal wires are wires located on the lateral side of the unit sections, one of the longitudinal wires being an edge wire.

7. A coupling according to any one of claims 1 to 6, characterized in that the mounting means for the first arm are constituted by at least one tab which can receive a first transverse wire and a loop which can receive a second transverse wire, the tab-loop ensemble latching onto the first cable tray unit section.

8. A coupling according to claim 7, characterized in that the loop is located close to the free end of the first arm.

9. A coupling according to claim 8, characterized in that it comprises a second loop close to the loop, the second loop constituting a hinge and allowing the coupling to be turned back along the unit section in a reverse position which is opposite to its mounted position, a ratchet or equivalent means maintaining it in its turned back position.

10. A coupling according to any one of claims 1 to 6, characterized in that the means for mounting the first arm are constituted by a longitudinal surface which bears on at least one longitudinal wire of the unit section and, on either side of this longitudinal bearing surface, a transverse surface which bears on a transverse wire, the two transverse bearing surfaces being adapted to bear on two different transverse wires, the forces exerted on the longitudinal bearing surface being in the opposite direction to the forces exerted on the two transverse bearing surfaces, at least one guide mark allowing the coupling to be positioned in a predetermined position.

11. A coupling according to claim 10, characterized in that it comprises at least one stop means for latching the coupling in a predetermined position.

12. A coupling according to claim 10 or claim 11, characterized in that the two transverse bearing surfaces can bear on two successive transverse wires.

13. A coupling according to any one of claims 10 to 12, characterized in that the longitudinal bearing surface is constituted by lugs located laterally on the edges of the strip, which lugs are shaped so as to bear on two longitudinal wires, these lugs being integral with the edges of the strip over all or a part of their length.

14. A coupling according to any one of claims 10 to 13, characterized in that the transverse bearing surfaces are constituted by the lapped section of the strip edges.

15. A coupling according to any one of claims 11 to 14, characterized in that the stop means is constituted by at least one tab or recess in which a transverse wire can be at least partially housed, co-operating with one of the transverse bearing surfaces.

16. A coupling according to claim 15, characterized in that it comprises a second stop means, each stop means co-operating with a different transverse wire.

17. A coupling according to any one of claims 10 to 16, characterized in that at least one of the transverse bearing surfaces comprises an access ramp.

18. A coupling according to any one of claims 1 to 17, characterized in that the resilient catch means of the second arm is located close to the free end of the arm and is constituted by a tongue provided with a crook forming a housing for a transverse wire.

19. A coupling according to claim 18, characterized in that the tongue is inclined with respect to the general direction of the strip.

20. A coupling according to any one of claims 1 to 17, characterized in that the resilient catch means of the second arm is constituted by a pin located either close to the free end of the arm, or close to the centre of the coupling, the pin being adapted to co-operate resiliently with a transverse wire and to house it.

21. A coupling according to any one of claims 18 to 20, characterized in that it further comprises a guide means located at the free end of the second arm.

22. A wire cable tray unit section, characterized in that one end is provided with two couplings in accordance with any one of claims 1 to 21 mounted by their first arms on said unit section, the other end of the unit section being free of couplings, but capable of receiving the resilient catch means of two arms of two other couplings in accordance with any one of claims 1 to 21 mounted on another unit section.

23. A unit section according to claim 22, characterized in that the two couplings are mounted symmetrically on the lateral sides of the unit section.

24. A unit section according to claim 23, characterized in that the two couplings are mounted between the edge wire and the longitudinal wire preceding the edge wire.

## Patentansprüche

1. Schiene zum Zusammenbau von Kabelbahnabschnitten, die aus einem Gitter von Längsdrähten und Querdrähten bestehen, die in Längsrichtung in zwei Arme aufgeteilt ist, wobei jeder Arm mit Montageeinrichtungen versehen ist, die seine lösbare Positionsverriegelung in der Endzone eines ersten Abschnitts bzw. der Endzone eines zweiten Abschnitts ermöglichen, dadurch gekennzeichnet, daß nur die Montageeinrichtungen des ersten Arms es ermöglichen, die Schiene fest mit dem ersten Abschnitt zu verbinden, während die Einrichtungen zur Montage des zweiten Arms auf dem zweiten Abschnitt mindestens eine elastische Befestigungseinrichtung aufweisen, die beim Zusammenbau der beiden Abschnitte mit einem Querdraht des zweiten Abschnitts zusammenwirken kann.

2. Schiene nach Anspruch 1, dadurch gekennzeichnet, daß sie die allgemeine Form eines Bandes hat, das ein Profil aufweist oder nicht, wobei die Einrichtungen zur Montage des ersten und des zweiten Arms an den gewünschten Stellen auf dem Band angeordnet sind.

3. Schiene nach Anspruch 2, dadurch gekennzeichnet, daß die Einrichtungen zur Montage des ersten und des zweiten Arms integraler Bestandteil des Bands sind, das aus einem Stück besteht.

4. Schiene nach Anspruch 2 oder 3, dadurch gekennzeichnet, daß das Band mit nach innerhalb oder nach außerhalb des Kabelbahnabschnitts, an dem es montiert werden soll, umgebogenen Rändern versehen ist.

5. Schiene nach einem der Ansprüche 2 bis 4, dadurch gekennzeichnet, daß das Band eine Breite aufweist, die abgesehen von den Spielräumen gleich dem Abstand ist, der zwei aufeinanderfolgende Längsdrähte der Abschnitte trennt, zwischen die es montiert wird.

6. Schiene nach Anspruch 5, dadurch gekennzeichnet, daß die beiden Längsdrähte auf dem Seitenrand der Abschnitte angeordnete Drähte sind, wobei einer der Längsdrähte ein Kantendraht ist.

7. Schiene nach einem der Ansprüche 1 bis 6, dadurch gekennzeichnet, daß die Einrichtungen zur Montage des ersten Arms aus mindestens einer Lasche, die einen ersten Querdraht aufnehmen kann, und einer Öse bestehen, die einen zweiten Querdraht aufnehmen kann, wobei die Einheit aus Lasche und Öse die Verriegelung auf dem ersten Kabelbahnabschnitt gewährleisten.

8. Schiene nach Anspruch 7, dadurch gekennzeichnet, daß die Öse sich in der Nähe des freien Endes des ersten Arms befindet.

9. Schiene nach Anspruch 8, dadurch gekennzeichnet, daß sie in der Nähe der Öse eine zweite Öse aufweist, die ein Scharnier bildet und es ermöglicht, die Schiene entlang des Abschnitts in die rückwärtige Position entgegengesetzt zu ihrer montierten Position umzuklappen, wobei eine Raste oder eine gleichwertige Einrichtung ihren Halt in dieser umgeklappten Position ermöglicht.

10. Schiene nach einem der Ansprüche 1 bis 6, dadurch gekennzeichnet, daß die Einrichtungen zur Montage des ersten Arms aus einer Längsfläche zur Auflage auf mindestens einem Längsdraht des Abschnitts und zu beiden Seiten dieser Längsauflagefläche einer Querfläche zur Auflage auf einem Querdraht besteht, wobei die beiden Querauflageflächen auf zwei verschiedenen Querdrähten aufliegen können, wobei die auf die Längsauflagefläche wirkenden Kräfte den Kräften entgegengesetzt liegen, die auf die beiden Querauflageflächen wirken, wobei mindestens eine Markierung es ermöglicht, die Schiene in einer bestimmten Position zu positionieren.

11. Schiene nach Anspruch 10, dadurch gekennzeichnet, daß sie eine Sperreinrichtung aufweist, die es ermöglicht, die Schiene in einer bestimmten Position zu verriegeln.

12. Schiene nach Anspruch 10 oder 11, dadurch gekennzeichnet, daß die beiden Querauflageflächen auf zwei aufeinanderfolgenden Querdrähten aufliegen können.

13. Schiene nach einem der Ansprüche 10 bis 12, dadurch gekennzeichnet, daß die Längsauflagefläche aus Lappen besteht, die seitlich auf den Rändern des Bandes angeordnet sind, Lappen, deren Form geeignet ist, um an zwei Längsdrähten anzuliegen, wobei diese Lappen über einen Teil ihrer oder ihre ganze Länge fest mit den Rändern des Bandes verbunden sind.

14. Schiene nach einem der Ansprüche 10 bis 13, dadurch gekennzeichnet, daß die Querauflageflächen aus der Kantenfläche der umgebogenen Ränder des Bands bestehen.

15. Schiene nach einem der Ansprüche 11 bis 14, dadurch gekennzeichnet, daß die Sperreinrichtung aus mindestens einer Lasche oder einer Aussparung besteht, die sich zumindest teilweise ein Querdraht einfügen kann, der mit einer der Querauflageflächen zusammenwirkt.

16. Schiene nach Anspruch 15, dadurch gekennzeichnet, daß sie eine zweite Sperreinrichtung aufweist, wobei jede Sperreinrichtung mit einem anderen Querdraht zusammenwirkt.

17. Schiene nach einem der Ansprüche 10 bis 16, dadurch gekennzeichnet, daß mindestens eine der Querauflageflächen eine Zugangsrampe aufweist.

18. Schiene nach einem der Ansprüche 1 bis 17, dadurch gekennzeichnet, daß die elastische Befestigungseinrichtung des zweiten Arms sich in der Nähe des freien Endes dieses Arms befindet und aus einer mit einer Falte versehenen Zunge besteht, die einen Sitz für einen Querdraht bildet.

19. Schiene nach Anspruch 18, dadurch gekennzeichnet, daß die Zunge in bezug auf die allgemeine Richtung des Bandes geneigt ist.

20. Schiene nach einem der Ansprüche 1 bis 17, dadurch gekennzeichnet, daß die elastische Befestigungseinrichtung des zweiten Arms aus einem Zapfen besteht, der sich entweder in der Nähe des freien Endes des Arms oder in der Nähe der Mitte der Schiene befindet, Zapfen, der elastisch mit einem Querdraht zusammenwirken und ihn aufnehmen kann.

21. Schiene nach einem der Ansprüche 18 bis 20, dadurch gekennzeichnet, daß sie weiter eine Führungseinrichtung aufweist, die sich am freien Ende des zweiten Arms befindet.

22. Kabelbahnabschnitt aus Draht, dadurch gekennzeichnet, daß ein Ende mit zwei Schienen gemäß einem der Ansprüche 1 bis 21 versehen ist, die mit ihren ersten Armen an dem Abschnitt montiert sind, wobei das andere Ende des Abschnitts keine Schienen aufweist, aber die elastische Befestigungseinrichtung der zweiten Arme von zwei anderen Schienen gemäß einem der Ansprüche 1 bis 21 aufnehmen kann, die an einen anderen Abschnitt montiert sind.

23. Abschnitt nach Anspruch 22, dadurch gekennzeichnet, daß die beiden Schienen symmetrisch auf die Seitenränder des Abschnitts montiert sind.

24. Abschnitt nach Anspruch 23, dadurch gekennzeichnet, daß die beiden Schienen zwischen den Kantendraht und den vor dem Kantendraht liegenden Längsdraht montiert sind.
